(19) Europäisches Patentamt

European Patent Office

Office européen des brevets

(11) EP 2 071 515 A1

(12) **EUROPEAN PATENT APPLICATION**

(43) Date of publication:
**17.06.2009 Bulletin 2009/25**

(51) Int Cl.:
*G06T 7/20* (2006.01)

(21) Application number: **07122829.0**

(22) Date of filing: **11.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Honda Research Institute Europe GmbH**
**63073 Offenbach/Main (DE)**

(72) Inventors:
• **Eggert, Julian, Dr.**
**63179 Obertshausen (DE)**
• **Rebhan, Sven**
**63179 Obertshausen (DE)**

• **Willert, Volker, Dr.**
**63500 Seligenstadt (DE)**
• **Zhang, Chen**
**64295 Darmstadt (DE)**

(74) Representative: **Rupp, Christian et al**
**Mitscherlich & Partner**
**Patent- und Rechtsanwälte**
**Sonnenstraße 33**
**80331 München (DE)**

Remarks:
Amended claims in accordance with Rule 137(2) EPC.

(54) **Visually tracking an object in real world using 2D appearance and multicue depth estimations**

(57) The invention relates to a method for the estimation of the dynamic state of a real-world object over time using a camera system, 2D image information and a combination of different measurements of the object's distance from the camera. The 2D image information is used to track an object's 2D position as well as its 2D size and 2D size change using its appearance. In addition, an object's distance from the camera is gained from one or several direct depth measurements. The 2D position and size, and the object's depth are coupled with each other to get an improved estimation of an object's 3D position and 3D velocity, and so get an improved real-world object tracking system, which can be used on a moving platform like a robot or a car with mounted cameras for a dynamic visual scene analysis.

**Figure 1**

**Description**

The present invention describes a method for the estimation of the dynamic state of a real-world object over time using a camera system, 2D image information and a combination of different measurements of the object's distance from the camera. The invention also relates to a tracking apparatus having camera means and programmed computing means.

*Background*

For technical systems, visual tracking is one key feature necessary for analyzing objects in dynamic environments, and has been subject of intensive research during the last decades, leading to applications in the field of e.g. surveillance, collision avoidance and trajectory evaluation.

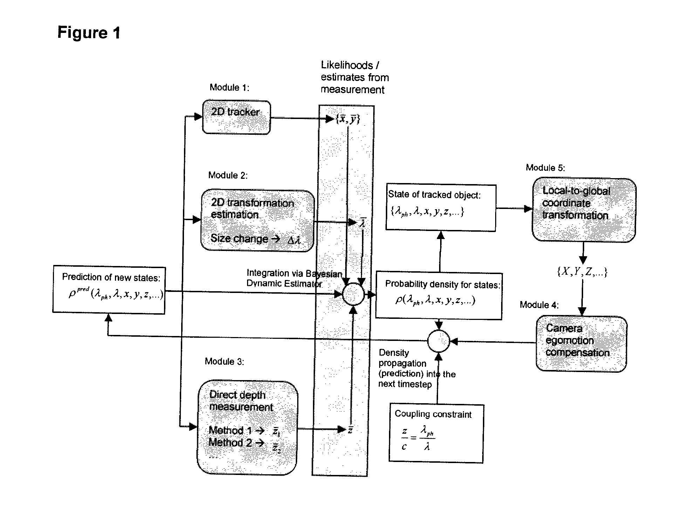

As it is explained in detail in Toward Robot Learning of Tool Manipulation from Human Demonstration, Aaron Edsinger and Charles C. Kemp 1 *Computer Science and Artificial Intelligence Laboratory Massachusetts Institute of Technology Cambridge, Massachusetts* (see particularly figures 1 and 10, in a robot application the result of the visual tracking can be forwarded to a visual servoing unit controlling the position and orientation of the tracked object in the input field of the camera means by controlling actuators for adapting the position and orientation of the camera means.

Visual servoing may involve the use of one or more cameras and a computer vision system to control the position of a robot's end-effector (manipulator) relative to the workpiece (being the tracked object).

The main problem of technical tracking systems resides in that they often require accurate internal models of the objects that are being tracked. As an example, in a traffic scene, these can e.g. be 3D models (either volumetric or surface models, including knowledge about their exact physical dimensions) of cars, which are then fitted to match the stimulus as it is received by a camera system. Alternatively, many technical tracking systems find the objects by specific knowledge about an object's appearance, like its color. But in a general case, the objects that should be tracked are not known in advance, so that no accurate 3D model or other specific knowledge is available. In this case, tracking systems have to rely on estimations of an objects 3D position and 3D velocity using a combination of several different cues and measurements.

*Prior art*

Visual tracking is the capability to visually identify and follow, using a signal supplied by camera means, a real-world object over time despite that it is changing its dynamical parameters (position, velocity, etc.) and its 2D appearance on the camera. The camera appearance is intrinsically 2D because it constitutes a perspective projection of the visual properties of the real-world 3D objects onto a 2D screen. It may change considerably due to different surface effects caused by variable external conditions (like external light spectrum, repositioning of light sources, reflectance and shading effects, etc.), internal properties like object deformations, or simply because the object rotates and repositions in depth, so that the perspective projection leads to a different 2D appearance of the object in the captured images.

More specifically, visual tracking usually defines a dynamically constrained search of the object over time. This includes the estimation of dynamic states of the object (its position, velocity, etc.) and further transformation parameters, with both types of dynamic parameters usually being gained by a correspondence search which tries to maximize the match between internally stored appearance models and the stimulus that provides the current, real appearance of an object. The maximization is realized by varying the internal appearance models depending on the objects hypothetic dynamic parameters. The best matches are then processed further to get a new estimate of the true parameters used for further tracking the object. A survey of tracking mechanisms can be found in [1].

Prior art techniques for visual tracking include the following:

1. Some known tracking systems deal with purely 2D-based tracking, estimating as object parameters e.g. its 2D position, velocity and acceleration using a 2D "template". Examples constitute special algorithms like correlation-based search of the objects in the visual input using an Euclidean difference cost function between the template and the input, mean-field techniques which use a histogram-based cost function [2,3], and differential methods which constitute a linearized version of the Euclidean cost function (e.g. Lucas-Kanade, or "KLT" algorithms). In the following, a module working according to any of these techniques will be referred to as "2D-tracker".

2. More complex object parameters for tracking, like geometrical 2D transformations including rotation, scaling and shearing can be estimated using template matching techniques. An example constitutes again the "KLT" algorithm, with special variants for the estimation of affine transformations [4-6]. In the following, this technique will be referred as "2D transformation estimation".

3. Depth is usually included as an additional "measurement", gained from a separate cue. State-of-the-art is to use a binocular/stereo vision system that allows for disparity computation, resulting in a depth estimate for the tracked object [7]. The depth is attached to the objects state but does not influence the 2D-based tracking, which runs autonomously. Disparity-based depth computation has considerable limitations in terms of reliability and only works well in a narrow depth range limited by the baseline length (the horizontal displacement between the two cameras), so that e.g. humans are only able to use it in a range of a few meters. In the following this technique will be referred to as "disparity-based depth measurement".

4. Alternatively to 2D-trackers, 3D trackers sometimes use accurate internal 3D models of the object (which have to be measured by other means or known in advance) [8,9]. In this case, if an accurate match of a transformed and projected version of the internal 3D model with the camera input can be found, its size on the retina allows drawing conclusions about its depth.

5. Another type of binocular 3D trackers starts directly using 3D coordinates as internal state, and tries to find a particular object appearance in both cameras. In this case, the 2D appearance match calculations and the depth estimation are coupled automatically via the 3D coordinates and their projection onto the 2D coordinates of the left and right cameras. These trackers are often implemented using Dynamic Bayesian Networks (including Kalman filters as a special case) so that the estimations are gained and improved over time.

6. Known multicue trackers integrate multiple cues for the estimation of the same type of parameters, either combining them according to their reliability or selecting the most reliable cue(s) and basing the estimation on these only.

7. Generally, Dynamic Bayesian Estimators are a very researched field for the temporal estimation and integration of state variables as it occurs during tracking. We assume this prior-art technique including its variants Particle Filter and Kalman Filter to be known [10-13].

8. There exist a number of visual tracking systems using depth-sensing camera technology, e.g. taking advantage of time-of-flight signals ( see WO 2004/107266A1), which provide a robust and dense 3D signal for the view field. Usually, these systems rely on the 3D data to detect and track an object, i.e., the object is "cut-out" using the depth data. The approach pursued in this invention, however, relies on standard visual cameras and appearance-based tracking so that a) the tracked object does not need not be segmentable from its 3D data and b) no special sensing hardware is required. Nevertheless, data from such sensing technology could be integrated into our system as an additional depth measurement in the very sense of point[VII].

## *Detailed description of the invention*

The present invention targets at a visual tracking system which does not need accurate object models in advance, but is nevertheless able to estimate an object's 3D position and 3D velocity relying on the analysis of an object's 2D appearance and the integration of several visual cues for depth estimation.

This capability is achieved by means of the features of the independent claims. The dependent claims develop further the central idea of the present invention.

A first aspect of the invention relates to a method for tracking arbitrary real-world objects by estimating their 3D position and 3D velocity using 2D appearance hints and multicue depth estimations. The method comprises the steps of:

(1.1.) Taking a camera image measured at time t,
(1.2.) Preprocessing a subregion of the camera image at time t where the object to be tracked is expected using a series of cues to get the input features at time t,
(1.3.) Using the input features at time t to initialize the tracker template by indication of a region of the visual input at time t using external means, with the region gained either from additional algorithms (like a segmentation algorithm) or by user interaction (indicating the position and region in the image delivered by the camera). At this time step, the selected region is also stored in form of a weighting mask and the internal state of the object gets initialized to a position derived from the region (e.g., using its centroid, its center of gravity or its averaged position integrated using the weighting mask),
(1.4.) Taking the next camera image at time t+dt,
(1.5.) Preprocessing a subregion of the camera image at time t+dt in the same way as in step 1.2,
(1.6.) Using a 2D-tracker on the input features at times t and t+dt to get estimates of the 2D position and 2D velocity of the objects appearance in camera image 2D coordinates,

(1.7.) Using an approximate estimation of the objects depth (its distance from the camera system) at time t from an additional cue, which can be but need not be visually based. Measured at two consecutive timesteps t and t+dt, this serves as an approximation for the depth change. In practice, the depth measurement may involve e.g. input from a second camera as in the case of a binocular camera system,

(1.8.) Using a 2D transformation estimation on the camera images and / or selected input features at times t and t+dt to extract the relative change of scale / size of the object that is being tracked.

(1.9.) Coupling the approximate estimation of the depth and the depth change of the object from step 1.7 with the change in scale / size from step 1.8 to improve the depth estimation for the object, in the sense that for rigid objects a reduction or an increase in size is a hint for an increase or decrease in depth, respectively, of an object,

(1.10.) Combining the 2D position and 2D velocity of the tracked object from step 1.6 (in camera coordinates) with the depth and depth change estimation from step 1.9 and converting it into global 3D coordinates by using camera positioning information, to get the global coordinates of the object that is being tracked,

(1.11.) Using the 3D position to calculate an approximate physical size of the object,

(1.12.) Iterating the steps 1.4 -1.11 while the object is being tracked, until the object is lost (which can be detected e.g. by some confidence criterion from the match between input and template), and

(1.13.) Starting again at step 1.1 to track the same or a new object.

The method may furthermore comprise the step of:

(2.1.) taking changes of the position and orientation of the camera in global space into account to compensate for motion of the camera and / or the platform where it is mounted on.

Uncertainties can be taken into account by using probabilistic methods for the estimation of the object states according to steps 1.6 and 1.7 and / or the coupling according to step 1.9.

The approximate depth and depth change / depth velocity estimation from step 1.7 may occur incrementally by integrating the results over time, like e.g. when using Dynamic Bayesian Filters / Kalman filters, etc.

Instead of a single approximate depth estimation a series of depth estimations based on different cues and / or measurement techniques can be used which are then again coupled with the 2D change in scale / size change estimation as in step 1.9.

The two estimation steps 1.7 and 1.8 may influence each other, in the sense that

a) the estimation of the 2D transformation from step 1.8 occurs by taking the expected depth change / depth velocity from step 1.7 into account, meaning that an expected, reduced or increased size caused by an increase / decrease in depth is considered in the transformation search procedure,

b) the estimation of the object's depth from step 1.7 occurs by using prior information about the expected depth derived from the physical size calculated in step 1.11 and the expected change of scale /size of the object being tracked from step 1.8.

The same principles may be applied to higher-order derivatives of object's state parameters, so that e.g. accelerations of an object's position or size or orientation are estimated and used for the tracking procedure.

Further features, properties and advantages of the present invention will become evident for the skilled person when reading the following detailed description of preferred embodiments of the invention, when taken in conjunction with the figures of the enclosed drawings.

Figure 1 shows an overview of a system for implementing the invention.

The system comprises several modules:

1. A 2D-tracker module which works based on the 2D appearance of an object to estimate its position and velocity. This occurs without the necessity of accurate prior models of the object that is being tracked; instead, the tracking templates (i.e., the prototypical parts of the scene that should be tracked from now on) can be directly extracted from the input image as a first step. This allows to track general, arbitrary objects without prior limitations on the object's appearance and object class/type.

2. A geometrical 2D transformation estimation module which estimates several transformation parameters that allow to find the best match between the template and the input, including its scale and the rate of scale change. As an example, a scale change of 0.1 between two tracking time steps would then mean that the 2D appearance of the object (i.e., its appearance as it is delivered by the camera system) that is being tracked has grown 10% in size.

3. One or several modules that provide independent measurements of the object's depth (i.e., the distance of the object from the camera system). These measurements may, however, be very unreliable. In our exemplary case, we use a) a dense, binocular disparity-based depth measurement system based on the comparison of local patches between the left and right cameras and b) a more globally working binocular system that tries to find the object in the left and the right camera images and calculates a single depth value for a tracked object from the displacement between the two matches.

4. Means to transform coordinates from the camera coordinate system into a global coordinate system and back. In this case, the "complete" 3D camera coordinates for each point consist of the 2D camera coordinates plus a depth value. Assuming that the camera images can be rectified to account for lens distortions so that it can be treated as a sort of "pinhole-camera", and knowing the position and orientation of the camera in global space, one can easily find the coordinate transformations via geometrical considerations. The entire transformation from one coordinate system to the other can then be described in terms of a translation, an orthonormal projection and a perspective projection.

5. Means to measure or estimate changes of the position and orientation of the camera in global space, so that a motion of the system with the camera system can be quantified. This is of advantage especially for the case of autonomously moving platforms with mounted cameras, like e.g. moving cars or robots with vision systems.

The system receives its 2D input image with a size of w*h pixels from a camera that is attached to a platform which optionally may be movable. It is assumed that the position and orientation of the platform with respect to a globally anchored coordinate system, and the position and orientation of the camera (or the two cameras, in case that the objects depth measurement is supplied by binocular disparity) with respect to the platform, are approximately known at any moment in time. This allows the conversion of coordinates back and forth between the global 3D coordinate systems and the 3D coordinate systems anchored at and aligned with the cameras.

Furthermore, it is assumed that the projections from the camera 3D coordinates to the camera 2D camera input coordinates and back are known. The consequence is that one can always convert coordinates back and forth between the global 3D coordinate system and the 2D camera input coordinates.

Now the processing according to the invention will be explained:

As a first step, the 2D camera input is preprocessed using a series of n cues, leading to a set of n images. The cues can be gained by simple preprocessing methods, like applying orientation, contrast or color extraction filters on the input image, but can also imply more sophisticated measures that are specific to a particular object, like its expected color. The exact choice of the cues is not of relevance for this invention as long as they contain sufficient information to be able to track an object using the preprocessed camera image. In the ideal case, the different cues convey uncorrelated information about the object, so that tracking deficits from one cue can be compensated by other cues, making the entire process robust against input variations. Most of the following steps use the n cues extracted from the preprocessed input image, which will be called the "n input features" from here on.

To save processing resources it is possible to limit the preprocessing to a limited subregion of the 2D camera field. The subregion can e.g. be determined from an estimated position, size and velocity of the object that should be tracked. Once the tracking has started, all these parameters will be continuously estimated by the tracking system, so that they are readily available and at each timestep the subregion can be adjusted accordingly.

To start with, the system needs an approximate idea of how the object that should be tracked looks like. For this purpose, the system has to be supplied with a 2D appearance template, which works in the same space as the input features. In practice, this means that the system gets such a template from user interaction or other modules not described here (like memory modules that can supply a previously recorded appearance template), or that it gets a position and area information, again from user interaction or from other modules, and extracts the 2D appearance template by itself using the current input features. In detail, extracting the template requires indication of a position and an area that is supplied directly in, or that can be converted to, 2D camera input coordinates. The internal state of the object that is used to describe the objects 2D appearance within the system is composed of the template, the position in 2D camera coordinates and the weighting mask, gained from the indicated area. Eventually, e.g. if the position has been supplied in 3D coordinates, also the 3D position will be part of the objects state, as well as supplementary information like assumed velocities, sizes, etc.

Once that the tracker has been initialized, the object can be searched in subsequent images by finding those parts of the visual scene where a match between the 2D appearance template and the input features is large. This is accomplished by the 2D tracker, which in our special case is implemented as a state-of-the-art multicue Dynamic Bayesian Tracker which operates incrementally and statistically. The result from this module is a probabilistic map which indicates the probability that the tracked object has currently some particular 2D camera input position and velocity.

If an object's 2D appearance changes considerably over time, it is useful to incorporate cue and template adaptation steps into the tracking procedure, which readjust the 2D appearance template and / or parameters of object specific cues.

As a further step, now the depth is estimated, meaning the 3D distance, between the object and the camera. The central idea of this invention is that two specific (explained in the following) depth estimations are coupled which operate on very different cues and which work in complementary ways to mutually compensate weaknesses of each single estimation. 1) One of them is a direct depth estimation using conventional techniques, like taking advantage of binocular vision. On itself, this direct depth estimation can be a combination of several different submethods which may have been already integrated with each other. 2) The second technique is the depth change estimation that we can extract from observing a change in size of the 2D appearance of an object in a single camera. The rationale is that an object which is increasing or decreasing its distance to the camera causes a decrease or increase, respectively, of the size of the 2D appearance. If we know the objects depth and the depth velocity, we can estimate the expected size change of an object's 2D appearance. To the contrary, if we know the objects depth and its 2D appearance size change, we can estimate the depth velocity. The two depth estimations (i.e., the direct one and the 2D size change estimation based one) are therefore intertwined and it is reasonable to design a 3D tracking system in such a way that it takes advantage of the combination of these 2 properties. Such a system allows the stable and easy 3D tracking of an arbitrary object without any accurate 3D model of the object itself, relying mostly on its 2D appearance and 2D appearance change.

In particular in combination with binocular techniques, coupling of the two different depth estimation methods provides advantages for a 3D object tracking system. Binocular systems work well in a close distance to the camera depending on the camera baseline length. Depth estimation by observation of the size change of the tracked object, however, can work over a larger range of distances. Both methods can therefore bootstrap each other; as an example, an object whose depth is accurately measured in the close distance range can be tracked in depth measuring its size change as it moves out of the range of accurate 3D estimation of binocular systems.

The size change of the 2D appearance of an object is extracted in this system using a template matching procedure as described in point 2 of prior art, referred to as 2D transformation estimation. In our case, the system searches for the affine transformations $A$ that provide the best match between the 2D appearance template and the input image. At each timestep $t_k$, the current transformation state $A(t_k)$ represents the best description of the current 2D appearance of the tracked object in terms of its template, in the sense: "the currently tracked object looks like the 2D appearance template transformed by a certain amount, e.g. rotated by 5 degree and scaled by 10%". The next timestep $t_{k+1}$ transformation state $A(t_{k+1})$ is then estimated by propagating the transformation state $A(t_k)$ into the future and starting a new template matching based transformation estimation search from there. From each affine transformation state, we extract the size $\lambda$ by approximating it as a composition of a scaling and a rotation operation, in the way

$$A(t_k) = \begin{pmatrix} a_{1,1} & a_{1,2} \\ a_{2,1} & a_{2,2} \end{pmatrix} \approx \begin{pmatrix} \lambda & 0 \\ 0 & \lambda \end{pmatrix} \bullet \begin{pmatrix} \cos(\alpha) & -\sin(\alpha) \\ \sin(\alpha) & \cos(\alpha) \end{pmatrix} \quad .$$

$$[\text{Eq. 1}]$$

This means that the scale $\lambda$ can be calculated directly from the determinant of the transformation state matrix. The results from two consecutive timesteps can then be subtracted to calculate the transformation change, e.g. the scale transformation change $\Delta\lambda$ between two timesteps, which quantifies the size change of the 2D appearance.

The direct depth estimation based on a binocular input was in our case a standard disparity-based dense (i.e., pixelwise) depth measurement (see point 3 of prior art) followed by an extraction of a single approximate depth for the entire object that is being tracked using the object weighting mask (e.g. by spatial integration of the dense depth measurement with the mask). These measurements were integrated over time again using a Dynamic Bayesian Estimator. An additional, second binocular depth measurement that we incorporated into the system is a direct search of the 2D appearance template extracted from the first camera in the second camera, using e.g. crosscorrelation or the template matching techniques described in point 2 of prior art. From the relative displacements between the positions where the template is found in the left against the right camera, a disparity is extracted that can also be used as basis for a depth measurement.

The direct depth measurement provides some hints on the depth of an object, which is often unreliable. Using the depth from consecutive time steps, we can also extract the velocity in depth of the moving object relative to the observer/the camera platform. If the camera platform itself is moving, and the parameters of this motion are known, then this effect can be compensated, e.g. by subtracting the camera position and motion from the object parameters to get the object parameters in absolute coordinates.

Additionally to the direct depth measurement, the system delivers a 2D appearance size change measurement, as explained. For approximately rigid objects, and in a calibrated camera system, the relation between its physical size

$\lambda_{ph}$, its 2D appearance size $\lambda$ and the depth z is as follows (c is a constant that compresses several system parameters, like the camera focal length, the 2D screen size and the tracking template size):

$$\frac{z}{c} = \frac{\lambda_{ph}}{\lambda} \qquad\qquad [Eq.\ 2]$$

This expresses the expected fact that the 2D appearance size $\lambda$ and the depth z are inversely proportional to each other - meaning that for same physical size, objects that are more distant from / near to the camera appear smaller / larger in the camera system.

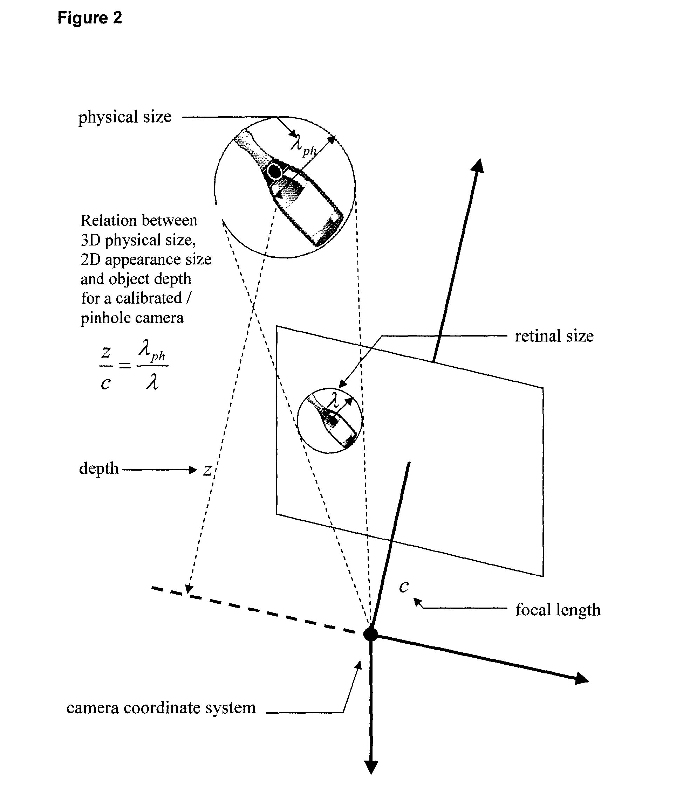

Figure 2 shows a graphical explanation of the mathematical relationship between the object depth, the object's physical size and its 2D appearance size.

In the system according to the invention, equation 2 couples the direct depth measurement with the depth inference by 2D appearance size change. Internally, we represent a tracked object by a state containing, among others like velocities, the parameters $\lambda_{ph}$, $\lambda$ and $\{x,y,z\}$.

The direct depth measurement delivers, at each time-step, a new estimate for z. The 2D appearance change measurement delivers, at each time-step, a new estimate for $\lambda$. The 2D position tracking together with the depth delivers, at each timestep, a new estimate for the global position $\{x,y,z\}$ of the object. The physical size $\lambda_{ph}$ is an internal parameter of the system that can receive additional hints about its state from other sources, like other sensory measurements, or alternatively prior knowledge about a particular objects physical size, or even supervised input from an interacting person, etc.

The task of the tracking system is now to take the current state parameters $\lambda_{ph}(t_k)$, $\lambda(t_k)$ and $\{x,y,z\}(t_k)$, use them to predict the expected state parameters $\lambda_{ph}(t_{k+1})$, $\lambda(t_{k+1})$ and $\{\hat{x},\hat{y},\hat{z}\}(t_{k+1})$ for the next time-step based on some dynamical model for the state parameters (like e.g. that the objects physical size is constant, that the object is moving with constant depth velocity and that the 2D appearance size changes according to eq. 2) and couple this with the newly measured estimates for $\lambda$ (from 2D size estimation) z (from direct depth estimation) and $\{x,y\}$ (from 2D position estimation) to get updated estimations for the new state parameters $\lambda_{ph}(t_{k+1})$, $\lambda(t_{k+1})$ and $\{x,y,z\}(t_{k+1})$, everything under the constraint of equation 2. (In figure 1, the newly measured estimates receive the notation $\bar{\lambda}$, $\bar{z}$ and $\{\bar{x},\bar{y}\}$ to differentiate them from the "true" estimates.)

The direct way to do this is using probabilistic methods, like the prediction-confirmation framework of Dynamic Bayesian Estimators / Recursive Bayesian Filters / Stochastic Dynamic Estimators, for a probability density that comprises at least the the considered state parameters,

$$\rho(\lambda_{ph}, \lambda, x, y, z, ...)$$

improving it over time to get the best estimate of the state parameters, given all past direct depth measurements and 2D appearance size change measurements. In this framework, the newly measured estimates correspond to the probabilistic likelihoods. From the current probability density, we can then extract the most probable parameters $\lambda_{ph}$, $\lambda$ and z that best describe the situation of the tracked object (e.g., by selecting the point of maximal probability, but different methods exist to achieve this). Of course, further object parameters like the object's 2D position and velocity (in camera coordinates) are delivered by the appearance-based 2D tracking system (module 1). Together with the size and depth parameters, the 3D position and velocity of the tracked object can then be determined (module 4).

Furthermore, the combination of 3D tracking and keeping track of the position and orientation of the camera (module 5) allows to compensate for egomotion effects, so that objects can be tracked reliably even if the camera system changes its location. In particular, this becomes relevant for applications related to visually guided robots or cars with mounted cameras for surveillance of other traffic participants, where reliable 3D tracking of objects while the robot / car itself is moving is a necessary capability for building up consistent representations of a visual scene.

REFERENCES

1. Yilmaz, A., Javed, O., Shah, M. "Object tracking: A survey". ACM Comput. Surv. 38(4) (2006) 13

2. Comaniciu, D., Ramesh, V., Meer, P. "Real-time tracking of non-rigid objects using mean-shift". Computer Vision and Pattern Recognition, 02:2142, 2000

3. Comaniciu, V., Meer, P. "Kernel-based object tracking", 2003

4. Lucas, B.D., Kanade, T. "An iterative image registration technique with an application to stereo vision". In International Joint Conference on Artificial Intelligence (IJCAI81), pages 674-679, 1981.

5. Tomasi, C., Kanade, T. "Detection and tracking of point features". Technical Report CMU-CS-91-132, Carnegie Mellon University, April 1991.

6. Shi, J., Tomasi, C. "Good features to track". In IEEE Conference on Computer Vision and Pattern Recognition (CVPR'94), pages 593-600, Seattle, June 1994.

7. Qian, N. "Binocular disparity and the perception of depth". Neuron 18(3): 359-368, March 1997.

8. Lou, J., Tan, T., Hu, W., Yang, H., Maybank, S.J. "3-D Model-Based Vehicle Tracking", IEEE Transactions on Image Processing, Volume 14, pp. 1561-1569, Oct. 2005.

9. Krahnstoever, N., Sharma, R. "Appearance Mangement and Cue Fusion for 3D Model-Based Tracking", IEEE Computer Society Conference on Computer Vision and Pattern Recognition, Volume 2, pp. 249-254, 2003.

10. Giebel, J., Gavrila, D., Schnorr, C. "A Bayesian for multicue 3D object tracking". In Proceedings of European Conference on Computer Vision, 2004.

11. Ristic, B. "Beyond the Kalman Filter: Particle Filters for Tracking Applications". Artech House Publishers, February 2004.

12. Arulampalam, S., Maskell, S., Gordon, N.J., Clapp, T. "A Tutorial on Particle Filters for On-line Nonlinear/Non-Gaussian Bayesian Tracking". In IEEE Transactions of Signal Processing, Vol. 50(2), pages 174-188, February 2002

**Claims**

1. A method for visually tracking real-world objects by estimating their 3D position and 3D velocity using 2D appearance hints and multicue depth estimations, the method comprising the steps of:

   (1.1.) Taking a camera image measured at time t,
   (1.2.) Preprocessing a subregion of the camera image at time t where the object to be tracked is expected using a series of cues to get the input features at time t,
   (1.3.) Using the input features at time t to initialize the tracker template by indication of a region of the visual input at time t using external means, with the region gained either from additional algorithms or by user interaction,
   (1.4.) Taking the next camera image at time t+dt,
   (1.5.) Preprocessing a subregion of the camera image at time t+dt in the same way as in step 1.2,
   (1.6.) Using a 2D-tracker on the input features at times t and t+dt to get estimates of the 2D position and 2D velocity of the object's appearance in camera image 2D coordinates,
   (1.7.) Using an estimation of the object's depth at time t from an additional cue, measured at two consecutive timesteps t and t+dt in order to approximate the depth change,
   (1.8.) Using a 2D transformation estimation on the camera images and/or selected input features at times t and t+dt to extract the relative change of scale / size of the object that is being tracked,
   (1.9.) Coupling the approximate estimation of the depth and the depth change of the object from step 1.7 with the change in scale / size from step 1.8 to improve the depth estimation for the object,
   (1.10.) Combining the 2D position and 2D velocity of the tracked object from step 1.6 in camera coordinates with the depth and depth change estimation from step 1.9 and converting it into global 3D coordinates by using camera positioning information, to get the global coordinates of the object that is being tracked,
   (1.11.) Using the 3D position to calculate an approximate physical size of the object, and
   (1.12.) Iterating the steps 1.4 -1.11 while the object is being tracked, until a stopping criterion is satisfied.

2. The method according to claim 1, furthermore comprising the step of:

   (2.1.) taking into account changes of the position and orientation of the camera in global space to compensate for motion of the camera and / or the platform where it is mounted on.

3. The method according to claims 1 or 2,

   (3.1.) where uncertainties are taken into account by using probabilistic methods for the estimation of the object states according to steps 1.6 and 1.7 and / or the coupling according to step 1.9.

**4.** The method according to any of claims 1-3,

(4.1) where the approximate depth and depth change / depth velocity estimation from step 1.7 occurs incrementally by integrating the results over time.

**5.** The method according to any of claims 1-4,

(5.1) where instead of a single approximate depth estimation a series of depth estimations based on different cues and / or measurement techniques are used which are then again coupled with the 2D change in scale /size change estimation as in step 1.9.

**6.** The method according to claims 1-5,
where the two estimation steps 1.7 and 1.8 influence each other, in the sense that

(6.1.) the estimation of the 2D transformation from step 1.8 occurs by taking into account the expected depth change / depth velocity from step 1.7, meaning that an expected reduced or increased size caused by an increase /decrease in depth is considered in the transformation search procedure,
(6.2.) the estimation of the objects depth from step 1.7 occurs by using prior information about the expected depth derived from the physical size calculated in step 1.11 and the expected change of scale /size of the object being tracked from step 1.8.

**7.** The method according to claims 1-6,
where

(7.1) the same principles are applied to higher-order derivatives of an objects state parameters.

**8.** The method according to any of the preceding claims, wherein the result of step 1.12 is forwarded to a visual servoing unit controlling the position and orientation of the tracked object in the input field of the camera means by controlling actuators for adapting the position and orientation of the camera means.

**9.** A tracking apparatus having camera means supplying a signal to computing means, which computing means are programmed to carry out a method according to any of the preceding claims.

**10.** A humanoid robot being provided with a tracking apparatus according to claim 8.

**11.** An automobile, being provided with a tracking apparatus according to claim 9.

**12.** A computer software program product, implementing a method according to any of claims 1 to 8 when run on a computing device.


**Amended claims in accordance with Rule 137(2) EPC.**

**1.** A method for visually tracking real-world objects by estimating their 3D position and 3D velocity using 2D appearance hints and multicue depth estimations, the method comprising the steps of:

(1.1.) Taking a camera image measured at time t,
(1.2.) Preprocessing a subregion of the camera image at time t where the object to be tracked is expected using a series of cues to get the input features at time t,
(1.3.) Using the input features at time t to initialize a tracker template by indication of a region of the visual input at time t using external means, with the region gained either from additional algorithms or by user interaction,
(1.4.) Taking the next camera image at time t+dt,
(1.5.) Preprocessing a subregion of the camera image at time t+dt in the same way as in step 1.2,
(1.6.) Using a 2D-tracker on the input features at times t and t+dt to get estimates of the 2D position and 2D velocity of the object's appearance in camera image 2D coordinates, wherein the object is searched in the next camera image at time t+dt by determining a match between the tracker template and the input features,
(1.7.) Using an estimation of the object's depth at time t from an additional cue, measured at two consecutive timesteps t and t+dt in order to approximate the depth change,

(1.8.) Using a 2D transformation estimation on the camera images and/or selected input features at times t and t+dt to extract the relative change of scale / size of the object that is being tracked,

(1.9.) Coupling the approximate estimation of the depth and the depth change of the object from step 1.7 with the change in scale / size from step 1.8 to improve the depth estimation for the object,

(1.10.) Combining the 2D position and 2D velocity of the tracked object from step 1.6 in camera coordinates with the depth and depth change estimation from step 1.9 and

converting it into global 3D coordinates by using camera positioning information, to get the global coordinates of the object that is being tracked,

(1.11.) Using the 3D position to calculate an approximate physical size of the object, and

(1.12.) Iterating the steps 1.4 -1.11 while the object is being tracked, until a stopping criterion is satisfied.

**2.** The method according to claim 1, furthermore comprising the step of:

(2.1.) taking into account changes of the position and orientation of the camera in global space to compensate for motion of the camera and / or the platform where it is mounted on.

**3.** The method according to claims 1 or 2,

(3.1.) where uncertainties are taken into account by using probabilistic methods for the estimation of the object states according to steps 1.6 and 1.7 and / or the coupling according to step 1.9.

**4.** The method according to any of claims 1-3,

(4.1) where the approximate depth and depth change / depth velocity estimation from step 1.7 occurs incrementally by integrating the results over time.

**5.** The method according to any of claims 1-4,

(5.1) where instead of a single approximate depth estimation a series of depth estimations based on different cues and / or measurement techniques are used which are then again coupled with the 2D change in scale / size change estimation as in step 1.9.

**6.** The method according to claims 1-5,
where the two estimation steps 1.7 and 1.8 influence each other, in the sense that

(6.1.) the estimation of the 2D transformation from step 1.8 occurs by taking into account the expected depth change / depth velocity from step 1.7, meaning that an expected reduced or increased size caused by an increase / decrease in depth is considered in the transformation search procedure,

(6.2.) the estimation of the objects depth from step 1.7 occurs by using prior information about the expected depth derived from the physical size calculated in step 1.11 and the expected change of scale /size of the object being tracked from step 1.8.

**7.** The method according to claims 1-6,
where
(7.1) the same principles are applied to higher-order derivatives of an objects state parameters.

**8.** The method according to any of the preceding claims, wherein the result of step 1.12 is forwarded to a visual servoing unit controlling the position and orientation of the tracked object in the input field of the camera means by controlling actuators for adapting the position and orientation of the camera means.

**9.** A tracking apparatus having camera means supplying a signal to computing means, which computing means are programmed to carry out a method according to any of the preceding claims.

**10.** A humanoid robot being provided with a tracking apparatus according to claim 8.

**11.** An automobile, being provided with a tracking apparatus according to claim 9.

**12.** A computer software program product, implementing a method according to any of claims 1 to 8 when run on

a computing device.

**Figure 1**

**Figure 2**

physical size

Relation between
3D physical size,
2D appearance size
and object depth
for a calibrated /
pinhole camera

$$\frac{z}{c} = \frac{\lambda_{ph}}{\lambda}$$

depth

retinal size

focal length

camera coordinate system

**European Patent Office**

## EUROPEAN SEARCH REPORT

Application Number

EP 07 12 2829

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FEYRER S ET AL: "Tracking and pursuing persons with a mobile robot" RECOGNITION, ANALYSIS, AND TRACKING OF FACES AND GESTURES IN REAL-TIME SYSTEMS, 1999. PROCEEDINGS. INTERNATIONAL WORKSHOP ON CORFU, GREECE 26-27 SEPT. 1999, LOS ALAMITOS, CA, USA,IEEE COMPUT. SOC, US, 26 September 1999 (1999-09-26), pages 83-88, XP010356537 ISBN: 978-0-7695-0378-3 * the whole document * ----- | 1-5,7-12 | INV. G06T7/20 |
| A | JINGPING JIA ET AL: "QP_TR Trust Region Blob Tracking Through Scale-Space with Automatic Selection of Features" IMAGE ANALYSIS AND RECOGNITION LECTURE NOTES IN COMPUTER SCIENCE;;LNCS, SPRINGER BERLIN HEIDELBERG, BE, vol. 4141, 1 January 2006 (2006-01-01), pages 862-873, XP019043762 ISBN: 978-3-540-44891-4 * the whole document * ----- | 1-12 | |
| A | QIANG WANG ET AL: "Real-Time Bayesian 3-D Pose Tracking" IEEE TRANSACTIONS ON CIRCUITS AND SYSTEMS FOR VIDEO TECHNOLOGY, IEEE SERVICE CENTER, PISCATAWAY, NJ, US, vol. 16, no. 12, 1 December 2006 (2006-12-01), pages 1533-1541, XP011151056 ISSN: 1051-8215 * the whole document * ----- | 1-12 | TECHNICAL FIELDS SEARCHED (IPC) G06T |

The present search report has been drawn up for all claims

| Place of search | Date of completion of the search | Examiner |
|---|---|---|
| Berlin | 29 May 2008 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004107266 A1

### Non-patent literature cited in the description

- **YILMAZ, A. ; JAVED, O. ; SHAH, M.** Object tracking: A survey. *ACM Comput. Surv.,* 2006, vol. 38 (4), 13
- **COMANICIU, D. ; RAMESH, V. ; MEER, P.** Real-time tracking of non-rigid objects using mean-shift. *Computer Vision and Pattern Recognition,* 2000, vol. 02, 2142
- **COMANICIU, V. ; MEER, P.** *Kernel-based object tracking,* 2003
- **LUCAS, B.D. ; KANADE, T.** An iterative image registration technique with an application to stereo vision. *In International Joint Conference on Artificial Intelligence,* 1981, 674-679
- **TOMASI, C. ; KANADE, T.** Detection and tracking of point features. *Technical Report CMU-CS-91-132,* April 1991
- **SHI, J. ; TOMASI, C.** Good features to track. *IEEE Conference on Computer Vision and Pattern Recognition,* June 1994, 593-600
- **QIAN, N.** Binocular disparity and the perception of depth. *Neuron,* March 1997, vol. 18 (3), 359-368

- **LOU, J. ; TAN, T. ; HU, W. ; YANG, H. ; MAYBANK, S.J.** 3-D Model-Based Vehicle Tracking. *IEEE Transactions on Image Processing,* October 2005, vol. 14, 1561-1569
- **KRAHNSTOEVER, N. ; SHARMA, R.** Appearance Mangement and Cue Fusion for 3D Model-Based Tracking. *IEEE Computer Society Conference on Computer Vision and Pattern Recognition,* 2003, vol. 2, 249-254
- **GIEBEL, J. ; GAVRILA, D. ; SCHNORR, C.** A Bayesian for multicue 3D object tracking. *Proceedings of European Conference on Computer Vision,* 2004
- **RISTIC, B.** Beyond the Kalman Filter: Particle Filters for Tracking Applications. Artech House Publishers, February 2004
- **ARULAMPALAM, S. ; MASKELL, S. ; GORDON, N.J. ; CLAPP, T.** A Tutorial on Particle Filters for On-line Nonlinear/Non-Gaussian Bayesian Tracking. *IEEE Transactions of Signal Processing,* February 2002, vol. 50 (2), 174-188